# EUROPÄISCHE PATENTSCHRIFT

(11) **EP 1 531 113 B1**
(45) Veröffentlichungstag und Bekanntmachung des Hinweises auf die Patenterteilung: **23.05.2007**
(21) Anmeldenummer: 04026972.2
(22) Anmeldetag: 12.11.2004
(51) Int. Cl.: B62D 15/02

(54) **Fahrerassistenzsystem zur Unterstützung der Spurhaltung eines Kraftfahrzeugs und Vorrichtung zum Betreiben des Fahrerassistenzsystems**
Driving assist system for supporting the tracking of a vehicle and apparatus for operating the driving assist system
Système d'assistance à la conduite pour aider la tenue de route d'un véhicule et appareil pour faire fonctionner le système d'assistance à la conduite

(30) Priorität: 13.11.2003 DE 10352955
(43) Veröffentlichungstag der Anmeldung: 18.05.2005
(73) Patentinhaber: AUDI AG, 85045 Ingolstadt (DE)
(72) Erfinder: Buschardt, Boris, Dr., 85049 Ingolstadt (DE)
(74) Vertreter: Thielmann, Frank

(56) Entgegenhaltungen:
- EP-A- 0 736 414
- EP-A- 1 049 051
- DE-A1- 10 210 723
- US-A- 5 765 116
- PATENT ABSTRACTS OF JAPAN Bd. 2000, Nr. 24, 11. Mai 2001 (2001-05-11) & JP 2001 199296 A (MATSUSHITA ELECTRIC IND CO LTD), 24. Juli 2001 (2001-07-24)

## Beschreibung

Die Erfindung betrifft ein Fahrerassistenzsystem zur Unterstützung der Spurhaltung eines Kraftfahrzeugs und eine Vorrichtung zum Betreiben eines solchen Fahrerassistenzsystems. Derartige Systeme sind beispielsweise durch die EP 0736414 und die EP 1049051 bekannt.

Zur Steigerung der Sicherheit und des Fahrkomforts bei Kraftfahrzeugen werden in modernen Fahrzeugen Fahrerassistenzsysteme integriert. Diese können zur Unterstützung des Fahrers, zur Information des Fahrers und/oder zur Warnung des Fahrers dienen. Eines dieser Fahrerassistenzsysteme ist ein sogenanntes Lane-Departure-Warning-System (LDW-System), das zur Unterstützung der Spurhaltung dient und den Fahrer durch Warnung an einem ungewollten Verlassen der Fahrspur hindern soll. Bei diesen Systemen werden dem Fahrer bei einer Gefahrensituation, d.h. bei einer Annäherung an eine Fahrspurbegrenzung, Warnungen in Form von akustischen, haptischen und/oder optischen Warnsignalen übermittelt oder Gegenmaßnahmen eingeleitet.

Die Warnungen werden hierbei in der Regel entweder in Abhängigkeit von der vorausberechneten Zeit oder der verbleibenden seitlichen Wegstrecke bis zum Überfahren der Fahrspurmarkierung ausgelöst. Weiterhin kann die Warnung des LDW-Systems beim Vorliegen bestimmter Bedingungen unterdrückt oder abgebrochen werden. Eine solche Unterdrückung oder ein solcher Abbruch erfolgt bislang bei Situationen, in denen die Bestimmung eines ungewollten Verlassens der Fahrspur aufgrund von Umgebungsbedingungen nicht oder nur schwierig möglich ist, z.B. wenn die Fahrspurerkennung zu schlecht ist, die Spurbreite zu niedrig oder zu hoch ist, die Spurkrümmung bzw. der Kurvenradius zu eng oder zu weit ist. Auch in Fällen, in denen die Geschwindigkeit des Fahrzeugs zu niedrig oder zu hoch ist, kann die Warnfunktion des LDW-Systems abgebrochen werden. Schließlich erfolgt die Warnung nicht, wenn der Fahrer lenkt, bremst, oder den Blinker betätigt.

Diese Systeme geben bereits eine gewisse Sicherheit, die aber nicht allen Situationen gerecht werden kann. Es ist daher Aufgabe der vorliegenden Erfindung, ein Fahrerassistenzsystem zur Unterstützung der Spurhaltung, insbesondere ein LDW-System, und eine Vorrichtung zum Betreiben eines solchen Fahrerassistenzsystems zu schaffen, mittels dessen die Sicherheit weiter gesteigert werden kann und auch in unterschiedlichen Fahrsituationen eine zuverlässige Warnung des Fahrers gewährleistet werden kann. Gleichzeitig soll der Fahrkomfort durch das LDW-System nicht beeinträchtigt werden.

Die Erfindung wird nach einem ersten Aspekt gelöst durch ein Fahrerassistenzsystem zur Unterstützung der Spurhaltung eines Kraftfahrzeugs, bei dem die Bestimmung des Eintritts einer Gefahrensituation durch zwei Ermittlungsarten erfolgt, wobei bei eine der Ermittlungsarten der Eintritt der Gefahrensituation in Abhängigkeit von der verbleibenden Zeit bis zum Eintritt der Gefahrensituation und bei der anderen Ermittlungsart der Eintritt der Gefahrensituation in Abhängigkeit von der verbleibenden seitlichen Wegstrecke zu dem Ort der Gefahrensituation ermittelt wird und wobei für die Auslösung einer Warnung zumindest ein Ermittlungswert zumindest einer der beiden Ermittlungsarten verwendet wird.

Unter Fahrerassistenzsystem zur Unterstützung der Spurhaltung eines Kraftfahrzeugs wird im Sinne dieser Erfindung insbesondere ein LDW-System verstanden, wobei die Warnung in Form eines akustischen, haptischen und/oder optischen Warnsignals oder in Form der Einleitung von Gegenmaßnahmen erfolgen kann. Als Gefahrensituation wird insbesondere das Erreichen der Fahrbahnbegrenzung bzw. das Überfahren der Fahrbahnbegrenzungsmarkierung bezeichnet. Die Warnung, die aufgrund der Ermittlung des Eintritts der Gefahrensituation in Abhängigkeit der verbleibenden Zeit bis zum Eintritt der Gefahrensituation erfolgt, wird im Sinne dieser Erfindung als zeitabhängige Warnung bezeichnet und die Warnung, die aufgrund der Ermittlung des Eintritts der Gefahrensituation in Abhängigkeit von der verbleibenden seitlichen Wegstrecke zu dem Ort der Gefahrensituation erfolgt, wird als ortsabhängige Warnung bezeichnet. Die verbleibende Zeit und die verbleibende Wegstrecke werden im Sinne der Erfindung als Warngrößen bezeichnet.

Mit dem erfindungsgemäßen Fahrerassistenzsystem, bei dem die Überprüfung einer zeitlichen und einer örtlichen Bedingung des Eintretens einer Gefahrensituation durchgeführt wird, d.h. bei dem der Eintritt der Gefahrensituation durch zwei unterschiedliche Verfahren überprüft wird, kann die Sicherheit gesteigert werden.

Wird ausschließlich die örtliche Ermittlungsart gewählt, d.h. erfolgt eine rein ortsabhängige Warnung, so weist dies den Nachteil auf, dass die Annäherungsgeschwindigkeit an die Fahrspurbegrenzung und damit die Kritikalität der Gefahrensituation nicht berücksichtigt wird.

Wird hingegen ausschließlich eine zeitliche Ermittlungsart gewählt, d.h. erfolgt eine rein zeitabhängige Warnung , so weist dies den Nachteil auf, dass die berechnete Größe und damit der Zeitpunkt der Warnauslösung stark von der Qualität der Sensordaten abhängig ist. Falls die Zeit, die als Time-to-Line-Crossing bezeichnet wird, mit Hilfe des Gierwinkelfehlers (Winkel zwischen Fahrzeuglängsachse und Fahrspurtangente) berechnet wird, so kann ein kleiner Offset dieses Winkels zu einer Vorzeichenänderung führen und damit unter Umständen ein Überfahren der Spurmarkierung ohne erfolgte Warnung ermöglichen. Wird die Time-to-Line-Crossing dagegen aus der Driftgeschwindigkeit des Fahrzeugs relativ zur Spurbegrenzung ermittelt, so ergibt sich das Problem der exakten Messung der Driftgeschwindigkeit. In der Regel erfolgt diese durch numerische Differenzierung der Querposition mit den bekannten Nachteilen. Auch bei dieser Variante kann es daher auf Grund von Rechenungenauigkeiten leicht zu einer Änderung des Vorzeichens der Driftgeschwindigkeit kommen und damit zu einem möglichen Überfahren der Spurbegrenzung ohne erfolgte Warnung.

Bei dem erfindungsgemäßen Fahrerassistenzsystem wird diesem Problem entgegengewirkt, indem in dem System die Ermittlungswerte beider Ermittlungsarten zur Verfügung gestellt werden und damit die Nachteile der einzelnen Ermittlungsarten überwunden werden können.

In einer bevorzugten Ausführungsform wird die zeitabhängige Warnung, bei der Ermittlungswerte, die in Abhängigkeit der verbleibenden Zeit bestimmt werden, verwendet werden, empfindlicher eingestellt als die örtliche Warnung, bei der Ermittlungswerte, die in Abhängigkeit von dem örtlichen Abstand bestimmt werden, verwendet werden.

Durch diese Kombination der beiden Ermittlungsarten wird in jeder Situation eine zuverlässige Warnung des Fahrers gewährleistet. Hierbei wird die ortsabhängige Warnung nur ausgelöst, wenn die zeitabhängige Warnung, z.B. aufgrund von Messungenauigkeiten, nicht ausgelöst wurde. Weiterhin kann mit diesem Verfahren auch eine zuverlässige Warnung erfolgen, wenn sich das Kraftfahrzeug der Fahrspurmarkierung beispielsweise parallel annähert. Die zeitabhängige Warnung würde in dieser Situation erst sehr spät erfolgen. Durch die Kombination ortsabhängiger und zeitabhängiger Warnungen wird in dieser Situation die örtliche Warnung ansprechen. Dies bedeutet, dass der Fahrer auch in dieser Situation eine frühere und damit angemessenere Warnung erhält.

Vorzugsweise wird in dem erfindungsgemäßen Verfahren für jede Ermittlungsart ein Schwellwert eingestellt, bei dessen Erreichen durch den entsprechenden Ermittlungswert eine Warnung ausgelöst wird. Der Schwellwert stell in der Regel einen Minimalwert dar. Der Ermittlungswert nähert sich somit von einem größeren Wert an den Schwellwert. Durch das Einstellen von Schwellwerten kann dieser für eine oder beide Ermittlungsarten flexibel festgelegt werden und dadurch die Empfindlichkeit des Systems den momentanen Bedingungen leicht angepasst werden.

In einer bevorzugten Ausführungsform wird nach der Auslösung einer Warnung aufgrund eines Ermittlungswerts einer ersten Ermittlungsart eine weitere Auslösung aufgrund von Ermittlungswerten der zweiten Ermittlungsart unterdrückt. Hierdurch kann verhindert werden, dass es zu einer doppelten Warnung aufgrund der Auslösung durch beide Ermittlungsarten kommt.

Gemäß einem weiteren Aspekt wird die Aufgabe durch ein Fahrerassistenzsystem zur Unterstützung der Spurhaltung gelöst, in dem beim Erreichen eines Schwellwerts durch einen Ermittlungswert eine Warnung ausgegeben wird, der Schwellwert von dem Fahrerassistenzsystem eingestellt wird, und für die Einstellung des Schwellwerts Eingangsgrößen betreffend den Fahrzeugzustand, den Zustand des Fahrers, Bedingungen der Fahrzeugumgebung und/oder den Zustand von Fahrerassistenzsystemen in dem Fahrzeug berücksichtigt werden.

Durch diese Ausgestaltung des Fahrerassistenzsystems, in der der Schwellwert und damit der Zeitpunkt der Auslösung einer Warnung in Abhängigkeit von aktuellen Bedingungen in und um das Fahrzeug eingestellt werden, wird es möglich, eine zu frühe Warnung, die von dem Fahrer als störend empfunden werden kann, zu vermeiden und zugleich eine Warnung zu kurz vor dem Eintritt der Gefahrensituation zu vermeiden. Somit werden gleichzeitig die Sicherheit und der Fahrkomfort gesteigert.

Als Eingangsgrößen für die Einstellung des Schwellwerts für die Auslösung der Warnung können erfindungsgemäß beispielsweise die Fahrgeschwindigkeit, die gemessene Fahrermüdigkeit, die Fahrspurkrümmung, die Krümmungsänderung der Fahrspur, die Spurbreite, die Art der Spurmarkierung, die Existenz von Objekten auf der Nachbarspur und/oder eine voreingestellte Warnempfindlichkeit des Fahrerassistenzsystems verwendet werden.

Wird als Eingangsgröße betreffend den Fahrzeugzustand die Fahrzeuggeschwindigkeit berücksichtigt, so kann der Tatsache Rechnung getragen werden, dass Fahrer bei höheren Geschwindigkeiten dazu tendieren, die Fahrspur insgesamt stärker auszunutzen. Somit kann der Schwellwert für die ortsabhängige Warnung herunter gesetzt werden und dadurch können Fehlwarnungen vermieden werden. Zudem erfolgt bei hohen Geschwindigkeiten die zeitabhängige Warnung in der Regel früher. Daher kann auch der Schwellwert für die zeitabhängige Warnung herunter gesetzt werden. Der Warnzeitpunkt wird somit bei hohen Geschwindigkeiten insgesamt auf einen späteren Zeitpunkt verschoben werden. Auch hierbei kann immer noch das Ansprechen der zeitabhängigen Warnung empfindlicher als das Ansprechen der ortsabhängigen Warnung eingestellt werden.

Weiterhin kann zusätzlich oder alternativ der Zustand des Fahrers, beispielsweise dessen Müdigkeit, berücksichtigt werden. Die Müdigkeit kann hierbei beispielsweise über Lidschlussmessungen ermittelt werden. Wird hierbei festgestellt, dass der Fahrer müde ist bzw. fast schon schläft, so kann die zu erwartende längere Reaktionszeit berücksichtigt werden, indem die Schwellwerte für eine oder beide Ermittlungsarten heraufgesetzt werden, wodurch es zu einer früheren Warnung kommt.

Die Eingangsgröße für die Einstellung des Schwellwerts, die die Bedingungen in der Fahrzeugumgebung betrifft, kann beispielsweise die Fahrspurkrümmung und die Krümmungsänderung der Fahrspur sein. Bei kurvigen Straßen haben einige Fahrer die Tendenz die Kurven zu schneiden. Eine Warnung bei jeder Annäherung an die Spurbegrenzung würde dabei als unangenehm empfunden werden. Daher kann es sinnvoll sein, bei kurvenreichen Strecken später zu warnen, d.h. die Schwellwerte heraufzusetzen.

Die Eingangsgröße für die Einstellung des Schwellwerts, die die Bedingungen in der Fahrzeugumgebung betrifft, kann weiterhin die Spurbreite sein. Bei schmalen Straßen, z.B. bei Landstraßen, ist der Raum, der vom Fahrer genutzt werden kann ohne eine Warnung zu generieren, deutlich kleiner als auf Autobahnen. Wird daher erkannt, dass die Straße schmal ist, können die Schwellwerte herunter gesetzt werden, wodurch es zu einer späteren Warnung kommt.

Die Eingangsgröße für die Einstellung des Schwellwerts, die die Bedingungen in der Fahrzeugumgebung betrifft, kann weiterhin die Art der Spurmarkierung sein. Diese kann beispielsweise gestrichelt oder durchgezogen sein, wobei die Art von einer Seite der Fahrbahn zu der anderen Seite variieren kann. Da in der Regel das Überfahren einer durchgezogenen Linie kritischer zu beurteilen ist, als das Überfahren einer gestrichelten Spurbegrenzungslinie, sollte bei einer durchgezogenen Linie früher gewarnt werden, d.h. der bzw. die Schwellwerte für die beiden Ermittlungsarten sollten bei Erkennen einer durchgezogenen Linie heraufgesetzt werden. Da in der Regel die Fahrbahnbegrenzungsmarkierung nicht auf beiden Seiten der Fahrbahn gleich ist, können mit dem erfindungsgemäßen Verfahren für die beiden Seiten der Fahrbahnbegrenzung unterschiedliche Schwellwerte entsprechend der Fahrbahnbegrenzungsmarkierung eingestellt werden.

Die Eingangsgröße für die Einstellung des Schwellwerts, die die Bedingungen in der Fahrzeugumgebung betrifft, kann schließlich die Existenz von Objekten auf der Nachbarspur sein. Solche Objekte können beispielsweise Fremdfahrzeuge, Leitplanken, Straßengräben und dergleichen sein. Befinden sich solche Objekte auf der Nachbarspur, so ist ein Überfahren der Spurbegrenzung als deutlich kritischer einzuschätzen als bei einer freien Nachbarspur. Auf das Überfahren der Begrenzung bei einer belegten Nachbarspur sollte daher früher aufmerksam gemacht werden und die Schwellwerte zumindest für diese Seite daher heraufgesetzt werden.

Weiterhin kann die Eingangsgröße betreffend den Fahrzeugzustand der Aktivierungszustand von Bedienelementen, insbesondere der Blinker des Kraftfahrzeugs, sein. Hierbei kann richtungsabhängig der Schwellwert in Abhängigkeit der Richtung des Blinkens herauf- oder herabgesetzt werden.

Schließlich ist es erfindungsgemäß auch möglich, die Schwellwerte aufgrund des Fahrstils und/oder der Reaktionszeit des Fahrers einzustellen. Hierbei wird eine Grundeinstellung bewirkt, die beispielsweise bei einem älteren Fahrer stets, d.h. unabhängig von anderen Eingangsgrößen, eine frühere Warnung verursacht, oder beim Einstellen eines sportlichen Fahrstils stets eine späte Warnung bewirkt.

Gemäß einer Ausführungsform können die Schwellwerte für die einzelnen Eingangsgrößen Kennfeldern entnommen werden, die in der Vorrichtung zum Betreiben des Fahrerassistenzsystems, beispielsweise in einer Zentraleinheit, abgelegt sein können. Vorzugsweise werden die Schwellwerte, die anhand der einzelnen Eingangsgrößen ermittelt werden, gegeneinander abgeglichen, wobei in dem Fahrerassistenzsystem eine Priorisierung hinterlegt sein kann. So kann beispielsweise stets - auch wenn andere Eingangsgrößen das Heruntersetzen des Schwellwerts bewirken würden - der Schwellwert heraufgesetzt werden, wenn beispielsweise eine Übermüdung des Fahrers erkannt wird.

In einer Ausführungsform kann die Warnung, d.h. das Auslösen der Warnung in Abhängigkeit aktueller Fahrzeugzustände unterdrückt werden und / oder die Art der Unterdrückung in Abhängigkeit zumindest eines aktuellen Fahrzeugzustands festgelegt werden.

Hierbei kann das Unterdrücken eine Unterbrechung einer bereits eingeleiteten Warnung oder die Vermeidung einer anstehenden Warnung sein. Die Art der Unterbrechung kann sich hierbei auf die Dauer der Unterbrechung beziehen oder aber auf die Warngröße oder Richtung, die der Auslösung der Warnung zugrunde gelegt wird.

So ist es beispielsweise möglich, die Warnung nur bei einem potentiellen Überfahren der Fahrbahnbegrenzung auf einer Seite der Fahrspur zu unterdrücken, wohingegen beim potentiellen Überfahren der Begrenzung auf der gegenüberliegenden Seite der Spur die Warnung nicht unterdrückt wird, d.h. ausgeführt werden kann. Auch die Warngröße, die in der Regel den Ermittlungswert darstellt, kann für die Unterdrückung der Warnung als Kriterium herangezogen werden. So kann beispielsweise nur die Warnung, die aufgrund von Ermittlungswerten, die in Abhängigkeit der Zeit bestimmt wurden, unterdrückt werden, wohingegen die Warnung aufgrund von Ermittlungswerten, die in Abhängigkeit des Ortes ermittelt wurden, weiterhin ausgeführt werden kann.

Aktuelle Fahrzeugzustände, die für diese Unterdrückung oder Wahl der Art der Unterdrückung berücksichtigt werden, sind vorzugsweise der Zustand des Fahrerassistenzsystems zur Unterstützung der Spurhaltung, der Zustand einer weiteren Fahrzeugkomponente und/oder Zustände der Fahrzeugumgebung sowie die Position des Fahrzeugs zu einer bestimmten Stelle in der Umgebung.

In einer Ausführungsform wird die Bestimmung des Eintritts einer Gefahrensituation durch zwei Ermittlungsarten durchgeführt und für jede Ermittlungsart ein Schwellwert eingestellt.

Gemäß einem weiteren Aspekt der Erfindung wird die Aufgabe gelöst durch eine Vorrichtung zum Betreiben eines Fahrerassistenzsystems, insbesondere eine Vorrichtung zum Betreiben eines LDW-Systems, wobei diese eine Einheit zur Bestimmung des Eintritts einer Gefahrensituation in Abhängigkeit von der verbleibenden Zeit und eine Einheit zur Bestimmung des Eintritts der Gefahrensituation in Abhängigkeit von der verbleibenden seitlichen Wegstrecke zu dem Ort der Gefahrensituation umfasst. Diese Einheiten können räumlich getrennt sein und mit einer gemeinsamen Zentraleinheit des Fahrerassistenzsystems verbunden sein oder aber in der Zentraleinheit integriert sein.

Die Zentraleinheit dient vorzugsweise auch dazu, den bzw. die Schwellwerte für die Auslösung der Warnung einzustellen. Weiterhin kann in der Zentraleinheit das Vorliegen von Gründen für das Unterdrücken der Warnung überprüft werden.

Die Zentraleinheit ist vorzugsweise mit Sensoren und anderen Erfassungseinrichtungen verbunden, über die die Eingangsgrößen für das Auslösen der Warnung, die Unterdrückung der Warnung und/oder die Wahl der Art der Warnung und/oder Unterdrückung ermittelt werden.

Schließlich kann in der Zentraleinheit, oder mit dieser verbunden, eine Speichervorrichtung vorgesehen sein, in die die Auslösung einer Warnung die Unterdrückung einer Warnung und gegebenenfalls der Grund für die Auslösung oder Unterdrückung eingeschrieben wird. Diese Speichervorrichtung kann dazu dienen, im Falle eines Unfalls nachvollziehen zu können, ob das LDW-System funktionstüchtig war.

Die Merkmale und Vorteile, die bezüglich des Fahrerassistenzsystems beschrieben werden, gelten - sofern anwendbar - entsprechend für die Vorrichtung und umgekehrt.

Die Erfindung wird im Folgenden anhand der beiliegenden Figuren erläutert, wobei:
Figur 1: eine schematische Blockdarstellung einer Ausführungsform einer Vorrichtung zum Betreiben eines Fahrerassistenzsystems zeigt; und
Figur 2: eine schematische Blockdarstellung einer weiteren Ausführungsform einer Vorrichtung zum Betreiben eines Fahrerassistenzsystems zeigt.

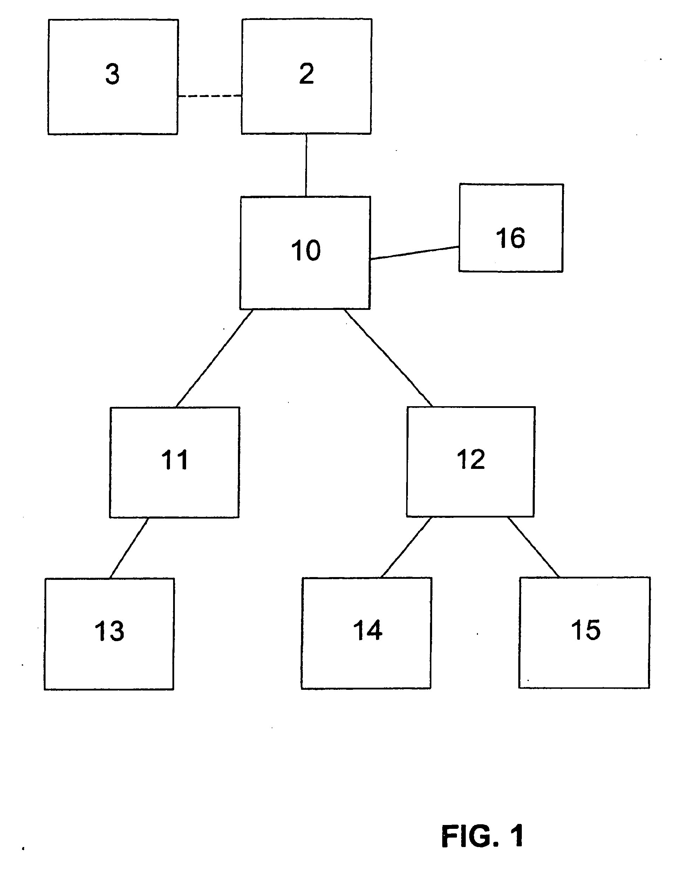

In Figur 1 ist schematisch eine Ausführungsform einer Vorrichtung zum Betreiben eines Fahrerassistenzsysterns dargestellt. Das Fahrerassistenzsystem ist in der dargestellten Ausführungsform ein LDW-System. Die Vorrichtung umfasst in der dargestellten Ausführungsform eine Zentraleinheit 10, eine Einheit 11 zur Bestimmung des Eintritts einer Gefahrensituation in Abhängigkeit der verbleibenden Zeit, eine Einheit 12 zur Bestimmung des Eintritts einer Gefahrensituation in Abhängigkeit der verbleibenden seitlichen Wegstrecke zu dem Ort der Gefahrensituation, eine Anzahl von Erfassungseinrichtungen 13, 14, 15 und 16, sowie eine Speichervorrichtung 2. Die Erfassungseinrichtungen 13, 14, 15 und 16 können beispielsweise Sensoren oder andere Messvorrichtungen darstellen. Weiterhin ist das Fahrerassistenzsystem 1 mit einer Schutzvorrichtung 3 verbunden. Diese kann beispielsweise einen Airbag in dem Kraftfahrzeug darstellen.

Über die Erfassungseinrichtung 13 können in der dargestellten Ausführungsform die Daten erfasst werden, die zur Bestimmung des Gierwinkelfehlers des Kraftfahrzeugs oder der Driftgeschwindigkeit des Fahrzeugs relativ zu der Fahrspurbegrenzung notwendig sind. Diese Daten werden an die Einheit 11 übermittelt, in der daraus die verbleibende Zeit bis zum Eintritt der Gefahrensituation, d.h. bis zum Verlassen der Spur bzw. Überfahren der Spurbegrenzung, bestimmt wird.

Weiterhin werden in der dargestellten Ausführungsform von den Erfassungseinrichtungen 14 und 15 die Daten erfasst, die für die Bestimmung des Abstands zu der Spurbegrenzung, d.h. der verbleibenden seitlichen Wegstrecke zu dem Ort der Gefahrensituation, notwendig sind. Diese Daten werden an die Einheit 12 übermittelt, in der die verbleibende seitliche Wegstrecke bis zum Eintritt der Gefahrensituation, d.h. bis zum Verlassen der Spur oder Überfahren der Spurbegrenzung, bestimmt wird.

Die Daten über die verbleibende Zeit und die verbleibende Strecke werden an die Zentraleinheit 10 übermittelt, in der diese mit Schwellwerten verglichen werden. Die Schwellwerte werden in der Zentraleinheit 10 eingestellt. Hierzu können Angaben oder Daten weiterer Erfassungsvorrichtungen 16 oder aber auch der Erfassungsvorrichtungen 13, 14 und 15, die für die Einheiten 11 und 12 verwendet werden, benutzt werden. Die von den Einheiten 11 und 12 zur Verfügung gestellten Daten werden mit denen der Schwellwerte verglichen, wobei stets eine Annäherung von oben an den Schwellwert erfolgt, d.h. die Schwellwerte stellen Minimalwerte dar.

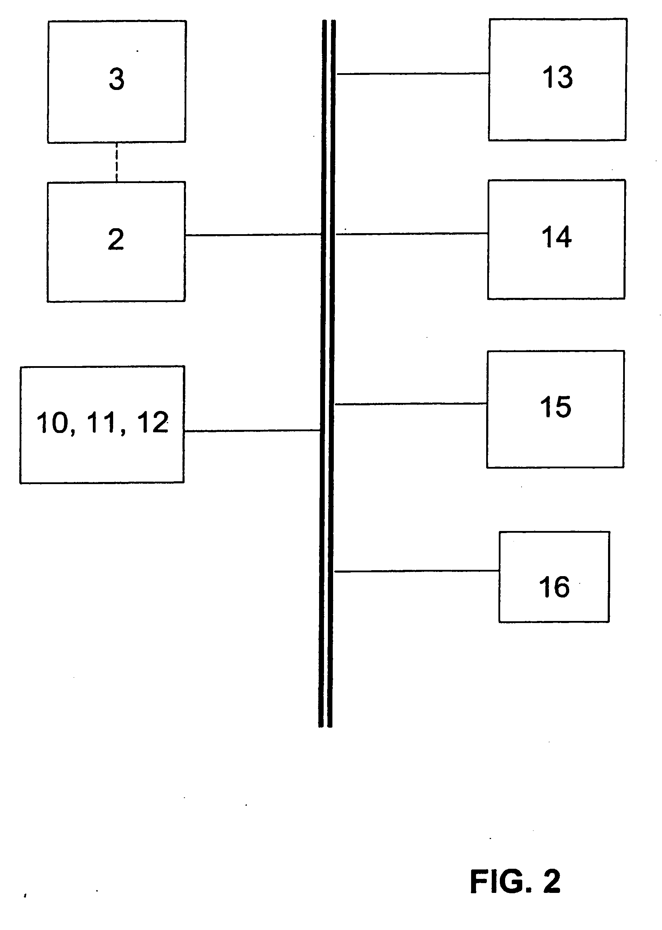

Die Einheiten 11 und 12 können durch Softwareprogramme innerhalb der Zentraleinheit 10 realisiert sein. Weiterhin kann, wie in Figur 2 schematisch dargestellt, die Verbindung zwischen den einzelnen Erfassungsvorrichtungen 13 bis 16 und den einzelnen Einheiten über einen gemeinsamen Datenbus, zum Beispiel den CAN-Bus realisiert sein, wodurch die Angaben und Daten der einzelnen Erfassungsvorrichtungen allen Einheiten 10, 11 und 12 zur Verfügung gestellt werden können. Auch die Schutzvorrichtung 3 oder ein damit verbundenes Steuergerät kann mit dem Datenbus verbunden sein.

Die Funktionsweise einer Ausführungsform des LDW-Systems gemäß der vorliegenden Erfindung wird im Folgenden beispielhaft beschrieben.

Die Schritte, die während des Betriebs des LDW-Systems durchgeführt werden, müssen nicht in der angegebenen Reihenfolge erfolgen. Im wesentlichen werden von dem LDW-System die folgenden Aktionen ausgeführt:
- Erfassung von Daten und Angaben für die Bestimmung des Eintritts einer Gefahrensituation, für die Einstellung des Schwellwerts für die Auslösung der Warnung und für die Unterdrückung der Warnung
- Einstellung des Schwellwerts / der Schwellwerte (falls ortsabhängig und zeitabhängig Ermittlung durchgeführt wird)
- Überprüfung des Erreichens des Schwellwerts zur Auslösung der Warnung
- Überprüfung des Vorliegens von Vermeidungsbedingungen
- Einschreiben der Vermeidungsbedingungen in eine Speichervorrichtung
- Auslösen einer Warnung
- Einschreiben der Warnungsauslösung in die Speichervorrichtung
- Überprüfung des Vorliegens von Unterbrechungsbedingungen
- Einschreiben der Unterbrechung in die Speichervorrichtung
- Überprüfung des Zustands einer Schutzvorrichtung
- Einschreiben des Zustands der Schutzvorrichtung in die Speichervorrichtung oder Steuerung des Einschreibens von Angaben über den Zustand des Fahrerassistenzsystems in die Speichervorrichtung in Abhängigkeit des Zustands der Schutzvorrichtung

Diese Schritte können zum größten Teil simultan durchgeführt werden. Sobald das LDW-System aktiviert wird, werden die Daten und Angaben entweder speziell für das LDW-System erfasst oder von Erfassungsvorrichtungen, beispielsweise über einen Datenbus, zur Verfügung gestellt.

Bei aktiviertem Fahrerassistenzsystem werden ständig die Bedingungen in und um das Fahrzeug erfasst. Hierzu können Sensoren oder andere Messeinrichtungen verwendet werden. Aufgrund der erfassten Daten und Angaben wird der Schwellwert für die Auslösung einer Warnung eingestellt. Die Bedingungen können einzeln oder gemeinsam berücksichtigt werden, wobei einige für eine Seite des Fahrzeugs bzw. der Fahrspur anders als für die andere Seite eingestellt werden können.

Bei der Einstellung des Schwellwerts wird dieser in Abhängigkeit der erfassten Angaben gegenüber einem Normalwert entweder herauf- oder herabgesetzt. Der Normalwert kann in dem Fahrerassistenzsystem fest einprogrammiert sein.

Die folgenden Bedingungen können zum Heraufsetzen des Schwellwerts für die Auslösung der Warnung und damit zu einer frühzeitigen Warnung führen.

Der Fahrer ist müde und hat daher eine längere Reaktionszeit. Die Fahrbahnbegrenzung ist eine durchgezogene Linie bzw. es befinden sich Objekte auf der Nachbarspur bzw. an der Fahrbahngrenze, wie beispielsweise eine Leitplanke, da hierbei das Überfahren der Fahrbahnbegrenzung eine größere Gefahr darstellt, als wenn die Nachbarspur frei ist oder die Fahrbahnbegrenzung eine gestrichelte Linie ist.

Ein Heruntersetzen des Schwellwerts, d.h. eine spätere Warnung, kann bei folgenden Bedingungen vorgenommen werden:
- das Fahrzeug befindet sich auf einer kurvenreichen Strecke - da hier in der Regel die Kurven geschnitten werden und ein frühzeitiges Warnen als störend empfunden würde;
- das Fahrzeug bewegt sich mit hoher Geschwindigkeit - da hier die Fahrer die Tendenz haben, die gesamte Fahrspurbreite auszunutzen;
- das Fahrzeug befindet sich auf einer schmalen Straße - da hier der Raum zwischen den Spurbegrenzungen gering ist.

Diese Bedingungen werden überprüft und entsprechend Ihrer Wichtigkeit bei der Einstellung des Schwellwerts für die Warnung berücksichtigt. Vorzugsweise werden die Bedingungen in Kombination berücksichtigt. So kann zwar ein Fahren auf einer kurvenreichen Strecke in der Regel eine Herabsetzung des Schwellwerts bedingen; ist aber gleichzeitig die Geschwindigkeit des Fahrzeugs niedrig, so kann der Schwellwert dennoch auf ein höheres Niveau eingestellt werden.

Werden für die Auslösung der Warnung unterschiedliche Ermittlungsarten verwendet, wird insbesondere der Eintritt einer Gefahrensituation in Abhängigkeit der verbleibenden Zeit bis zum Überfahren der Fahrbahnbegrenzung und in Abhängigkeit der verbleibenden seitlichen Wegstrecke ermittelt, so werden für diese unterschiedlichen Ermittlungsarten unterschiedliche Schwellwerte eingestellt. Die Schwellwerte für die beiden Ermittlungsarten werden ebenfalls unter Berücksichtigung der oben genannten Eingangsgrößen, die die Bedingungen in und um das Fahrzeug betreffen, eingestellt. Allerdings wird hierbei zusätzlich ein Verhältnis zwischen den beiden Schwellwerten berücksichtigt. Vorzugsweise wird der Schwellwert für die zeitabhängige Warnung so eingestellt, dass dieser früher erreicht wird als der Schwellwert für die ortsabhängige Warnung. So kann sichergestellt werden, dass die zeitabhängige Warnung früher anspricht, was zu einer Steigerung der Sicherheit führt. Sollte die zeitabhängige Warnung nicht ansprechen, so wird eine Warnung aufgrund der ortsabhängigen Warnung ausgeführt.

Sobald erkannt wird, dass der oder einer der Schwellwerte erreicht wurde, wird unmittelbar überprüft, ob ein Grund vorliegt, die Warnung zu unterdrücken. Diese Überprüfung kann entfallen, wenn beim Vorliegen eines Unterdrückungsgrunds automatisch die Auslösung von Warnungen blockiert wird.

Gründe für eine Unterdrückung der Warnung, d.h. in diesem Fall der Verhinderung einer Warnung bevor diese ausgelöst wird, können aufgrund zeitlich vorangegangener Geschehnisse oder anstehender Geschehnisse sowie aufgrund von Bedingungen in und um das Fahrzeug bestehen.

Beispielsweise wird eine Warnung unterdrückt, wenn davon auszugehen ist, dass der Fahrer aufmerksam ist. Dies kann durch den Eingriff eines ESP-Systems oder eines ASR-Systems erkannt werden. In Situationen, in denen ein solches System eingreift, treten in der Regel Längs- und Querbeschleunigungen auf, bei denen davon auszugehen ist, dass der Fahrer wach und aufmerksam ist. Zudem sind solche Situationen fahrdynamisch kritisch, so dass der Fahrer nicht zusätzlich durch eine Warnung abgelenkt werden sollte.

Weiterhin kann eine Verhinderung einer Warnung erfolgen, wenn von dem LDW-System innerhalb einer definierten vorausgehenden Zeitspanne eine Warnung ausgegeben wurde. Diese Zeitspanne kann beispielsweise einige Sekunden betragen. Durch diese Unterdrückung kann beispielsweise vermieden werden, dass ein Fahrer durch häufige, direkt aufeinanderfolgende Warnungen irritiert wird, wenn dieser beispielsweise nahe entlang einer Spurbegrenzungslinie fährt. Außerdem ist dieser Unterdrückungsgrund sinnvoll vor dem Hintergrund, dass ein Fahrer in der Regel auf eine Warnung des LDW-Systems reagiert. Diese Reaktion ist meist ein Gegenlenken, d.h. ein Wegsteuern von der Fahrspurbegrenzung, an die er sich zu nahe angenähert hat. Dieses Gegensteuern bewirkt, insbesondere, wenn es zu stark ausgeführt wird, ein sofortiges Annähern an die Spurbegrenzung auf der gegenüberliegenden Seite. Eine erneute Warnung ist aber für diese Annäherung nicht notwendig, da davon auszugehen ist, dass der Fahrer aufgrund der ersten Warnung aufmerksam ist.

Abhängig von dem Unterdrückungsgrund kann mit dem LDW-System auch die Art der Unterdrückung festgelegt werden. So kann beispielsweise die Unterdrückung nur auf Warnungen angewandt werden, die sich auf Gefahrensituationen auf einer Seite des Fahrzeugs bzw. auf eine Fahrspurbegrenzung beziehen.

Eine solche richtungsabhängige Unterdrückung kann beispielsweise bei dem genannten Unterdrückungsgrund einer zuvor ausgelösten Warnung des LDW-Systems sinnvoll sein. Hierbei kann die Unterdrückung sich beispielsweise auf die Gegenseite beschränken, d.h. auf die Seite, die der Seite gegenüberliegt, aufgrund derer die erfolgte Warnung ausgelöst wurde.

Alternativ kann statt der Unterdrückung eine Einstellung eines niedrigeren Schwellwerts vorgenommen werden. Soll beispielsweise die Warnung nur auf einer Seite reduziert werden, so kann für diese Seite der Schwellwert heruntergesetzt werden, wohingegen der Schwellwert für die Gegenseite beibehalten wird. Diese Art der Unterdrückung bringt den Vorteil mit sich, dass, wenn auch spät, in jedem Fall eine Warnung erfolgt. Allerdings sollte diese Art der Unterdrückung nur für solche Unterdrückungsgründe eingesetzt werden, bei denen nicht von einer häufigen Warnung und damit Belästigung des Fahrers auszugehen ist.

Weiterhin kann die Unterdrückung einer Warnung auch selektiv nach der zur Ermittlung der der Warnung zugrunde liegenden Ermittlungswerte verwendeten Ermittlungsart erfolgen. So kann beispielsweise eine Unterdrückung sich ausschließlich auf eine Warnung beziehen, die aufgrund zeitabhängiger Werte ausgelöst werden würde. Damit kann die Warnung, die aufgrund der Time-to-line-Crossing (TLC) Bestimmung ausgegeben würde, unterdrückt werden, während eine ortsabhängige Warnung weiterhin zugelassen werden würde.

Eine solche selektive Unterdrückung kann auch nur auf eine Seite angewendet werden. So kann, wie oben beschrieben, eine Unterdrückung der zeitabhängigen Warnung auf die Seite begrenzt werden, die der Seite gegenüberliegt, auf der in einer begrenzten vorausgegangenen Zeit bereits eine Warnung erfolgt ist. Dies hat den Vorteil, dass Warnungen in Folge der Reaktion des Fahrers auf eine vorherige Warnung unterdrückt werden, ein tatsächliches Überfahren der Linie aber aus Sicherheits- und Transparenzgründen nach wie vor zu einer Warnung führt.

Ein weiterer Unterdrückungsgrund, der ebenfalls richtungsabhängig ist, kann die Betätigung eines Blinkers sein. Diese kann über die Blinkhebelstellung erkannt werden. Wird beispielsweise der rechte Blinker betätigt, so werden nur Warnungen unterdrückt, die sich auf Geschehnisse beziehen, die auf der rechten Seite auftreten würden. Da der Fahrer durch Betätigen des Blinkers anzeigt, dass er das Fahrzeug in diese Richtung lenken will, ist eine Warnung bei einem Spurverlassen in dieser Richtung nicht notwendig. Diese richtungsabhängige Unterdrückung bringt aber auch noch weitere Vorteile mit sich. So kann die Anzahl an unterdrückten sinnvollen Warnungen reduziert werden, die erfolgen würde, wenn bei Betätigung des Blinkers die Warnungen auf beiden Seiten unterdrückt würden, ohne die Sicherheit zu mindern. Hat der Fahrer nämlich beispielsweise vergessen, den Blinker auszuschalten, so wird er zumindest auf einer Fahrspurseite weiterhin gewarnt. Zudem erhält der Fahrer bei einem gewollten Spurwechsel, bei dem er aus Versehen den Blinker in die falsche Richtung betätigt hat, eine Warnung. Da diese Situation durch die Fehlinformation des rückwärtigen Verkehrs durchaus kritisch sein kann, erscheint hier eine Warnung durchaus sinnvoll und angemessen.

Weiterhin kann eine Unterdrückung der Warnung bei einer Änderung der Fahrspurbreite erfolgen. Ändert sich die Fahrspurbreite innerhalb eines definierten Zeitraums oder innerhalb einer definierten Strecke um einen Betrag, der größer als ein vorgegebener Grenzwert ist, so kann die Warnung unterdrückt werden. Diese Unterdrückung ist sinnvoll, da es bei Fahrbahnverengungen, Fahrbahnaufweitungen oder dem kurzzeitigen Erkennen von falschen Spurmarkierungslinien, z.B. bei Ausfahrten, zu Fehlwarnungen kommen kann.

Schließlich können Warnungen unterdrückt werden, wenn die Position des Fahrzeugs zu bestimmten Stellen in der Umgebung des Fahrzeugs dies notwendig machen. Dies ist der Fall, wenn nach einer erfolgten LDW-Wamung der Abstand zwischen der Fahrzeugaußenkante und der Fahrspurmarkierung einen definierten Grenzwert unterschreitet oder das Fahrzeug die Spurmarkierung überfährt, wobei letzteres auch ohne vorherige Warnung geschehen kann. In diesem Fall sollte die Warnung unterdrückt werden, da andernfalls auch bei dem Vorgang des "sich wieder in die Spur Begebens" eine Warnung ausgegeben würde. Dies ist vom Fahrer in der Regel nicht gewünscht und wird als störend empfunden. Durch die ortsabhängige Unterdrückung der Warnung nach einer erfolgten Warnung kann dies vermieden werden.

Die Unterdrückung, die vor der Auslösung der Warnung erfolgt, d.h. die Vermeidung der Warnung, kann in eine Speichervorrichtung eingeschrieben werden. Vorzugsweise wird in diese Speichervorrichtung auch der Grund der Unterdrückung eingeschrieben. Diese Dokumentation der Unterdrückung kann im Falle eines Unfalls Auskunft darüber geben, ob das LDW-System funktionsfähig war.

Vorzugsweise wird beim Vorliegen eines Unterdrückungsgrunds eine Blockierung der Warnung automatisch ausgelöst, so dass ein aufwendiger Überprüfungsvorgang beim Erreichen des Schwellwerts durch einen der Ermittlungswerte nicht notwendig ist.

Liegen keine Unterbrechungsgründe vor, so wird die Warnung ausgelöst, d.h. ein optisches, akustisches oder haptisches Signal an den Fahrer gegeben und / oder eine Gegenmaßnahme, wie beispielsweise ein Gegenlenken, eingeleitet.

Auch das Ausführen von Warnungen kann in eine Speichervorrichtung eingeschrieben werden, die identisch mit der Speichervorrichtung sein kann, in die die Unterdrückung und die Unterdrückungsgründe eingeschrieben werden.

Auch während die Warnung ausgeführt wird, können Bedingungen auftreten, die eine Unterdrückung, in diesem Fall ein Unterbrechen der Warnung, notwendig machen.

Wird beispielsweise während einer begonnenen Warnung ein Eingriff eines anderen Fahrerassistenzsystems, wie eines ESP- oder ASR-Systems erkannt, so kann die Warnung unterbrochen werden. Wie oben bereits beschrieben, ist in einer solchen Situation von einem aufmerksamen Fahrer auszugehen und die Warnung könnte den Fahrer in dieser fahrdynamisch kritischen Situation ablenken.

Weiterhin wird eine Unterbrechung der Warnung vorgesehen werden, wenn eine definierte Maximaldauer der Warnung erreicht wurde. Vorzugsweise wird diese Maximaldauer individuell eingestellt. Diese Einstellung kann beispielsweise in Abhängigkeit der Ermittlungsart, aufgrund derer die Warnung erfolgt ist, geschehen.

Die Begrenzung der Maximaldauer hat den Vorteil, dass der Fahrer nicht durch zu lange Warnungen belästigt wird.

Auch bei einem Eingriff durch den Fahrer, z.B. durch Gegenlenken, kann die Warnung sofort unterbrochen werden. Im Vergleich zu einer konstanten Warndauer ergibt sich somit der Vorteil, dass der Fahrer durch unterschiedliche Warndauern bei unterschiedlich schnellen und effektiven Fahrerreaktionen eine positive Rückmeldung über seine Handlung erhält.

Es kann vorgesehen sein, eine Mindestdauer für die Warnung vorzugeben, um sicher zustellen, dass der Fahrer die Warnung wahrnimmt. Diese Mindestdauer kann aber verkürzt werden, wenn während dieser Zeit einer der Abbruchgründe auftritt, beispielsweise ein ESP-System eingreift.

Weiterhin kann die Dauer der Unterbrechung von dem LDW-System beeinflusst werden. So kann beispielsweise eine Warnunterbrechung, die durch die Betätigung des Blinkerhebels erfolgt ist, sofort aufgehoben werden, sobald ein Spurwechsel in Richtung des Blinkens erfolgt ist. Ist die Funktion "Autobahnblinken" aktiviert, d.h. eine Funktion, bei der ein Nachlaufen des Blinkers nach kurzem Antippen erfolgt, wird die Dauer der Warnunterdrückung verlängert. Nach einem gewollten und durch Blinken angekündigten Spurwechsel ist der Bedarf für die Warnunterdrückung nicht mehr gegeben. Der Fahrer erwartet, wenn er anschließend über eine Spurbegrenzung fährt, dass er eine Warnung erhält. Ist dies nicht der Fall, leidet die Systemtransparenz darunter. Andererseits darf eine Warnunterdrückung in Folge des Blinkens nicht sofort abgebrochen werden, wenn der Blinkerhebel zurückgesetzt wird. Viele Fahrer tippen den Blinker vor dem eigentlichen Spurenwechsel nur kurz an, so dass der Blinker beim eigentlichen Überfahren der Linie schon wieder deaktiviert ist. Für diesen Fall kann eine zusätzliche Überprüfung des tatsächlichen Überfahrens durchgeführt werden, bevor die Unterdrückung aufgehoben wird.

Weiterhin kann die Dauer der Unterdrückung der Warnung durch die Position des Kraftfahrzeugs auf der Spur beeinflusst werden. So kann nach einer erfolgten LDW-Warnung die Unterbrechung aufrecht erhalten werden bis sich das Fahrzeug wieder vollständig in der Fahrspur befindet und die Fahrzeugaußenkante einen Mindestabstand zu der Spurmarkierung besitzt. Dabei ist der Grenzwert für die Warnunterdrückung größer zu definieren als der Schwellwert, der für die ortsabhängige Warnauslösung eingestellt wird. Dies ergibt eine Hysterese zwischen der Warnauslösung und dem Ende der Warnunterdrückung. Außerdem kann es bei LDW-Systemen bei Fahrt entlang der Linie, z.B. im Vorfeld eines Überholvorgangs auf Landstraßen, zu einem gehäuften Auftreten von vom Fahrer ungewollten (aber prinzipiell berechtigten) Warnungen kommen. Durch die ortsabhängige Warnunterdrückung, bei der die Position des Fahrzeugs berücksichtigt wird (Hysterese zu der Warnauslösung) kann die Anzahl dieser ungewünschten Warnungen reduziert werden.

Die Dauer der Unterdrückung kann für die beiden Seiten der Fahrspurbegrenzung unterschiedlich eingestellt werden.

Auch die Beendigung einer Unterdrückung kann in die Speichervorrichtung, gegebenenfalls zusammen mit dem Grund für die Aufhebung der Unterdrückung, geschrieben werden.

In der Speichereinrichtung werden in der Regel die Daten in regelmäßigen Zeitabständen überschrieben, wobei die Dauer bis zum Überschreiben der Daten beispielsweise auf 30 Sekunden eingestellt werden kann. Durch diese Art des Einschreibens in die Speichervorrichtung kann sichergestellt werden, dass bei einem Unfall Angaben über die Geschehnisse in den letzten 30 Sekunden vor dem Unfall zur Verfügung stehen. Bevorzugt wird hierzu das Einschreiben in die Speichervorrichtung unterbrochen, sobald eine Schutzvorrichtung aktiviert wird. Dies kann beispielsweise der Airbag des Kraftfahrzeugs oder die Sperrvorrichtung für den Sicherheitsgurt sein.

Die Speichervorrichtung, die in einem separaten Gehäuse aufgenommen sein kann, kann eine Schnittstelle aufweisen, über die ein Auslesen der eingeschriebenen Daten ermöglicht wird.

Mit der vorliegenden Erfindung wird es somit möglich die Sicherheit zu steigern ohne den Fahrkomfort durch unnötige Warnungen oder Fehlwarnungen zu beeinträchtigen.

## Patentansprüche

1. Fahrerassistenzsystem zur Unterstützung der Spurhaltung eines Kraftfahrzeugs, bei dem die Bestimmung des Eintritts einer Gefahrensituation durch zwei Ermittlungsarten erfolgt, wobei bei einer der Ermittlungsarten der Eintritt der Gefahrensituation in Abhängigkeit der verbleibenden Zeit bis zum Eintritt der Gefahrensituation und bei der anderen Ermittlungsart der Eintritt der Gefahrensituation in Abhängigkeit von der verbleibenden seitlichen Wegstrecke zu dem Ort der Gefahrensituation ermittelt wird, und wobei für die Auslösung einer Warnung zumindest ein Ermittlungswert zumindest einer der beiden Ermittlungsarten verwendet wird, **dadurch gekennzeichnet, dass** die zeitabhängige Warnung, bei der Ermittlungswerte, die in Abhängigkeit der verbleibenden Zeit bestimmt werden, verwendet werden, empfindlicher eingestellt ist als die örtliche Warnung, bei der Ermittlungswerte, die in Abhängigkeit von dem örtlichen Abstand bestimmt werden, verwendet werden.

2. Fahrerassistenzsystem nach Anspruch 1, **dadurch gekennzeichnet, dass** für jede Ermittlungsart ein Schwellwert eingestellt wird, bei dessen Erreichen durch den entsprechenden Ermittlungswert eine Warnung ausgelöst wird.

3. Fahrerassistenzsystem nach Anspruch 1 oder 2, **dadurch gekennzeichnet, dass** nach der Auslösung einer Warnung aufgrund eines Ermittlungswerts einer ersten Ermittlungsart eine weitere Auslösung aufgrund von Ermittlungswerten der zweiten Ermittlungsart unterdrückt wird.

## Claims

1. Driver assist system for supporting the tracking of a vehicle in which the occurrence of a dangerous situation is determined by two methods of calculation, wherein, in one of the methods of calculation, the occurrence of the dangerous situation is determined as a function of the time remaining until the occurrence of the dangerous situation, and in the other method of calculation the occurrence of the dangerous situation is determined as a function of the remaining lateral distance to the location of the dangerous situation, and wherein at least one calculation value from at least one of the two calculation methods is used for triggering a warning, **characterised in that** the time-dependent warning, where calculation values which are determined as a function of the remaining time are used, is set more sensitively than the local warning, where calculation values that are determined as a function of the local distance are used.

2. Drive assist system according to Claim 1, **characterised in that** a threshold value is set for each method of calculation and that when this threshold value is reached a warning is triggered by the corresponding calculation value.

3. Drive assist system according to Claim 1 or 2, **characterised in that** after a warning is triggered due to a calculation value of a first method of calculation , further triggering due to calculation methods of the second method of calculation is suppressed.

## Revendications

1. Système d'assistance à la conduite destiné à favoriser le maintien de la trajectoire d'un véhicule automobile, dans lequel la détermination de l'entrée dans une situation de risque est réalisée selon deux modes de détermination, sachant que, dans l'un des modes de détermination l'entrée dans la situation de risque est déterminée en fonction du temps restant jusqu'à l'entrée dans la situation de risque et dans l'autre mode de détermination, l'entrée dans la situation de risque est déterminée en fonction de la distance latérale restant jusqu'au lieu de la situation de risque, et sachant qu'au moins une valeur de détermination d'au moins l'un des deux modes de détermination est utilisée pour le déclenchement d'une alarme, **caractérisé en ce que** l'alarme en fonction du temps, dans laquelle sont utilisées des valeurs de détermination calculées en fonction du temps restant, est réglée de manière plus sensible que l'alarme en fonction du lieu, dans laquelle sont utilisées des valeurs de détermination calculées en fonction de la distance latérale.

2. Système d'assistance à la conduite selon la revendication 1, **caractérisé en ce que**, pour chaque mode de détermination est définie une valeur seuil, une alarme étant déclenchée lorsque celle-ci est atteinte par la valeur de détermination correspondante.

3. Système d'assistance à la conduite selon la revendication 1 ou 2, **caractérisé en ce que**, après le déclenchement d'une alarme, sur la base d'une valeur de détermination issue d'un premier mode de détermination, un autre déclenchement, sur la base des valeurs de détermination issues du deuxième mode de détermination, est neutralisé.
